# EUROPEAN PATENT SPECIFICATION

(11) **EP 2 752 825 B1**
(45) Date of publication and mention of the grant of the patent: **22.03.2017**
(21) Application number: 11871691.9
(22) Date of filing: 30.08.2011
(51) Int. Cl.: G07F 19/00, G07D 9/00, G06K 7/08, G07F 7/08

(54) **DEVICE FOR READING MAGNETIC RECORDING MEDIUM**
VORRICHTUNG ZUM LESEN MAGNETISCHER AUFZEICHNUNGSMEDIEN
DISPOSITIF DE LECTURE DE SUPPORT D'ENREGISTREMENT MAGNÉTIQUE

(43) Date of publication of application: 09.07.2014
(73) Proprietor: Hitachi-Omron Terminal Solutions, Corporation, Tokyo 141-8576 (JP)
(72) Inventor: MAI, Jianzhong, Tokyo 141-8576 (JP); SUZUKI, Hiroyuki, Tokyo 141-8576 (JP); KAWAGUCHI, Ryota, Tokyo 141-8576 (JP); TADAMASA, Akihiro, Tokyo 141-8576 (JP)
(74) Representative: MERH-IP Matias Erny Reichl Hoffmann Patentanwälte PartG mbB
(86) International application number: PCT/JP2011/004827
(87) International publication number: WO 2013/030877

(56) References cited:
- EP-A1- 1 798 662
- WO-A1-2011/093340
- WO-A1-2011/093340
- DE-A1-102009 019 708
- JP-A- 2005 266 999
- JP-B2- 3 850 595
- US-A1- 2011 006 112

## Description

### Technical Field

The present invention relates to a device for reading data recorded in a magnetic recording medium and, more particularly, to a magnetic recording medium reading device having the function of preventing illegal data acquisition. A generic device is for instance known from US 2011/0006112 A1.

### Background Art

In a transaction processing device such as an ATM (Automated Teller Machine) or a CD (Cash Dispenser), a card reader for reading a magnetic card is installed. In such a transaction processing device, recently, a crime called skimming of illegally obtaining data recorded in a magnetic stripe of a card when the magnetic card is inserted in a card reader occurs.

As an example of typical skimming, there is a method of installing an illegal reader having a magnetic head (hereinbelow, called "skimmer") near a card insertion port of a card reader of an ATM or a CD and illegally obtaining data in a magnetic card inserted in the card reader by the magnetic head of the skimmer.

Various measures against such skimming have been proposed. For example, the following Patent Literature 1 describes a card reader having an interfering magnetic field generator provided near a card insertion port. In the card reader, an interfering magnetic field is generated in an outside region of the card insertion port by the interfering magnetic field generator. Consequently, even if a skimmer is attached to the outside of a card insertion port, data read by the magnetic head of the skimmer is data different from original data recorded in a card under the influence of the interfering magnetic field. In such a manner, data of a card can be prevented from being illegally taken.

In addition, the following Patent Literature 2 describes a card reader in which a loop antenna for generating an interfering magnetic field is disposed around a card insertion port. An antenna face of the loop antenna is parallel to a front face of the card insertion port. Also in this card reader, an interfering magnetic field is generated in an outside region of the card insertion port. Therefore, even if a skimmer is attached to the outside of the card insertion port, data of a card can be prevented from being illegally taken. A further device is known from WO 2011/093340 A1. Said device comprises a metal sensor in combination with an infrared sensor for preventing erroneous detection of things worn on a hand as a watch or a ring.

### Citation List

### Patent Literatures

Patent Literature 1: WO2007/048649
Patent Literature 2: Japanese Patent No. 4425674

### Summary of Invention

### Technical Problems

In order to detect that a skimmer is installed near a card insertion port in a card reader, a sensor for detecting a metal member as a component of the skimmer is necessary. In the card reader of Patent Literature 1, a sensor for detecting a metal member is provided in addition to an interfering magnetic field generator. However, in such a configuration, a dedicated sensor is necessary. Consequently, the number of parts increases, the cost becomes higher, and there is also a problem that it hinders miniaturization of the device.

An object of the present invention is therefore to provide a magnetic recording medium reading device capable of detecting a metal member without providing a dedicated sensor. Moreover, it is an object of the present invention to provide a more simple device, which enables the prevention of erroneous detection of same things worn on a hand, a watch or a ring, which might be judged as being a skimming device.

### Solution to Problems

The aforementioned problem is solved with a magnetic recording medium reading device according to claim 1. Further preferred embodiments are defined in the dependent claims. In the present invention, the control means may determine whether or not a state where the interfering magnetic field changes continues for predetermined time and, in the case where the state continues for predetermined time, determine that themetalmember is installed and notify a host device of installation of the metal member.
The control means detects a change in the interfering magnetic field generated by the magnetic field generating unit and detects a metal member installed near the insertion port based on the detection result.

In such a manner, without providing a dedicated sensor, a skimmer including a metal member as a component can be detected by detecting a change in the interfering magnetic field. That is, by the interfering magnetic field generated by the magnetic field generating unit, while preventing data in a magnetic recording medium from being read by a skimmer, the skimmer can be detected by using the interfering magnetic field.

In the present invention, the magnetic field generating unit may have an oscillation circuit including a loop antenna for generating the interfering magnetic field.

In the present invention, oscillation frequency of the oscillation circuit may be a first frequency, the control means may output a control signal having a second frequency lower than the first frequency to the magnetic field generating unit, and the oscillation circuit may perform an oscillating operation based on the control signal.

The control signal may be a rectangular-wave signal. In this case, the frequency of the rectangular-wave signal may change according to time zones. Alternatively, the frequency of the rectangular-wave signal may change at random.

In the present invention, preferably, a frequency domain of the interfering magnetic field is 100 Hz to 20 KHz.

In the present invention, switching means that switches oscillation frequency of the oscillation circuit maybe provided. In this case, the switching means may switch the oscillation frequency at the time point when the control means detects that the interferingmagnetic field starts changing. Alternatively, the switching means may switch the oscillation frequency every predetermined time.

In the present invention, adjusting means for making amplitude of an output of the oscillation circuit constant may be provided.

### Advantageous Effects of Invention

According to the present invention, by an interfering magnetic field, while preventing data in a magnetic recording medium from being read by a skimmer, the skimmer can be detected using the interfering magnetic field. Consequently, a dedicated sensor is unnecessary, so that the cost and size can be reduced.

### Brief Description of Drawings

Fig. 1 is a block diagram illustrating an electrical configuration of a card reader according to an embodiment of the present invention;
Figs. 2a and 2b are a side cross section and a front view of the card reader;
Figs. 3a and 3b are front views illustrating another example of a loop antenna;
Fig. 4 is a plan view of a magnetic card;
Fig. 5 is a block diagram illustrating concrete configuration of each of a magnetic field generating unit and a magnetic field control unit;
Fig. 6 is a diagram illustrating a state where a skimmer is installed near an insertion port;
Figs. 7a to 7c are waveform charts for describing the principle of detecting a metal member;
Fig. 8 is a diagram illustrating frequency spectra of an interfering magnetic field;
Fig. 9 is a diagram illustrating another example of the frequency spectra of the interfering magnetic field;
Fig. 10 is a block diagram illustrating another embodiment;
Figs. 11a and 11b are waveform charts of an oscillation output and a filter output when no metal member exists;
Figs. 12a and 12b are waveform charts of an oscillation output and a filter output when a metal member exists;
Fig. 13 is a waveform chart for describing frequency switching;
Fig. 14 is a waveform chart for describing another example of frequency switching;
Fig. 15 is a waveform chart in the case where an oscillation output changes due to a metal member other than a skimmer;
Fig. 16 is a waveform chart in the case where an oscillation output changes due to a skimmer; and
Figs. 17a and 17b are a side cross section and a front view in the case where a core is installed in a loop antenna.

### Description of Embodiments

Hereinafter, embodiments of the present invention will be described with reference to the drawings. In the drawings, the same reference sign expresses the same part or a corresponding part.

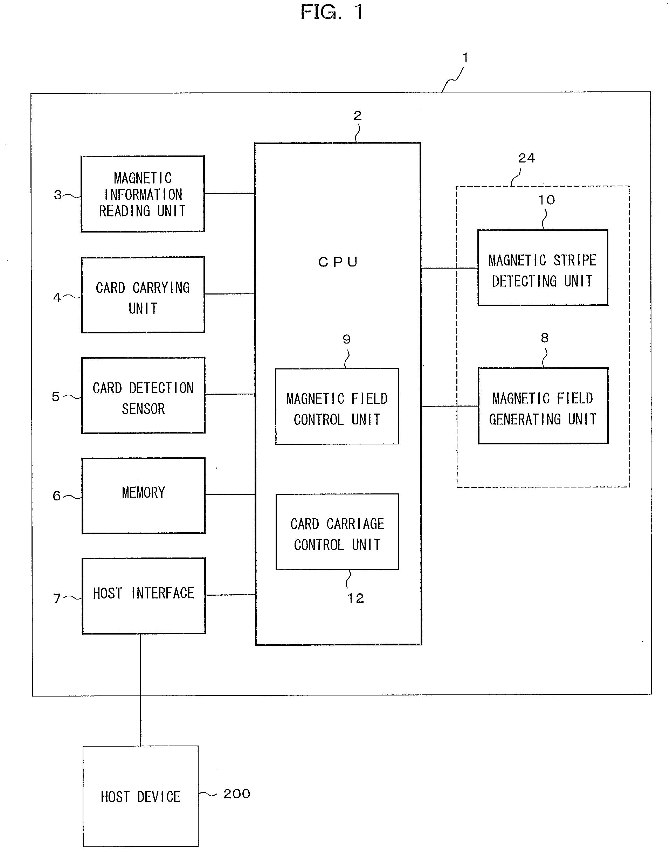

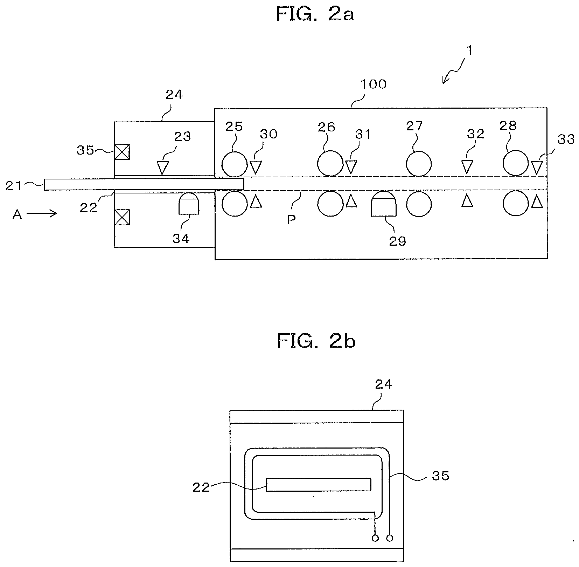

First, a configuration of a card reader will be described with reference to Fig. 1 and Figs. 2a and 2b.

As illustrated in Fig. 1, a card reader 1 according to the present embodiment has a CPU 2 for controlling the operations of the entire device, a magnetic information reading unit 3 for reading magnetic data recorded in a magnetic card, a card carrying unit 4 for carrying a magnetic card, a card detection sensor 5 for detecting a magnetic card, a memory 6 for storing magnetic data read by the magnetic information reading unit 3, a host interface 7 as a connection to a host device 200 (for example, ATM), a magnetic stripe detecting unit 10 for detecting a magnetic stripe of a magnetic card, and a magnetic field generating unit 8 for generating an interfering magnetic field to prevent reading of data recorded in the magnetic stripe.

The CPU 2 includes a magnetic field control unit 9 for controlling the magnetic field generating unit 8 and a card carriage control unit 12 for controlling the card carrying unit 4. The magnetic stripe detecting unit 10 and the magnetic field generating unit 8 are disposed in a card insertion port unit 24. The magnetic stripe detecting unit 10 includes a magnetic head 34 (Fig. 2a) which will be described later. The details of the magnetic field generating unit 8 and the magnetic field control unit 9 will be described later.

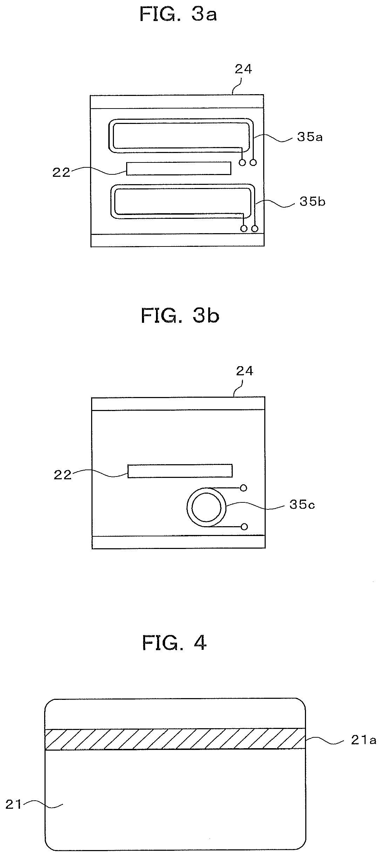

As illustrated in Fig. 2a, the card insertion port unit 24 is provided in a front face of a casing 100 of the card reader 1. In the card insertion port unit 24, an insertion port 22 in which a magnetic card (hereinbelow, simply called a "card") 21 is to be inserted is formed. As illustrated in Fig. 4, the card 21 has a magnetic stripe 21a. Fig. 4 is a rear view of the card 21. Near the insertion port 22, a card insertion detection sensor 23 for detecting the inserted card 21 is provided. The card insertion detection sensor 23 is, for example, a micro switch and disposed in a position where it is pressed by the card 21 inserted through the insertion port 22. The magnetic head 34 for detecting a magnetic stripe is also provided near the insertion port 22. The magnetic head 34 detects the magnetic stripe 21a of the card 21.

In the casing 100 of the card reader 1, carrier rollers 25 to 28, card position detection sensors 30 to 33, and a magnetic head 29 are provided. Each of the carrier rollers 25 to 28 consists of a pair of rollers disposed on the upper and lower sides of a carrier path P, and the card 21 is carried while being sandwiched by the pair of rollers. The carrier rollers 25 to 28 are coupled to a motor (not illustrated) via a carrier belt (not illustrated). One of a pair of carrier rollers is a drive roller to which the rotational force of the motor is transmitted, and the other roller is a driven roller which rotates in accordance with the drive roller. The carrier rollers 25 to 28 construct the card carrying unit 4 (Fig. 1) together with the carrier belt and the motor.

Each of the card position detection sensors 30 to 33 is an optical sensor of the transmission type and has a light emitting unit and a light receiving unit which are opposed to each other across the carrier path P. The arrangement interval of the sensors 30 to 33 is shorter than the length in the carriage direction of the magnetic card 21. The sensor 30 detects that the card 21 is sandwiched by the carrier rollers 25 which are closest to the insertion port 22. The sensor 33 detects that the inserted card 21 reaches a storage part (not illustrated) temporarily storing a card. The sensors 31 and 32 detect the position of the card 21 being carried. The card position detection sensors 30 to 33 construct the card detection sensor 5 (Fig. 1) together with the card insertion detection sensor 23.

The magnetic head 29 is provided on the lower side of the carrier path P between the carrier rollers 26 and the carrier rollers 27. The magnetic head 29 reads data recorded in the magnetic stripe 21a of the card 21 in the process of carriage of the inserted card 21 in the carrier path P. The magnetic head 34 is a magnetic head for detecting the existence of data recorded in a magnetic stripe whereas the magnetic head 29 is a magnetic head for reproducing data itself recorded in the magnetic stripe. The interval between the magnetic head 29 and the sensor 33 is slightly longer than the length in the carriage direction of the card 21. Therefore, when the card 21 reaches the storage part, that is, when the front end of the card 21 reaches the position of the sensor 33, the magnetic head 29 will have completed reading of the data recorded in the card 21.

A loop antenna 35 is provided near the front face of the card insertion port unit 24. As understood from Fig. 2a, the loop antenna 35 is provided, near the insertion port 22, closer to the insertion port 22 than the magnetic head 34 for detecting a magnetic stripe in the insertion direction A of the card 21. The loop antenna 35 is an antenna obtained by winding a conductor once or a plurality of times in a loop shape and is disposed so as to surround the insertion port 22 as illustrated in Fig. 2b.

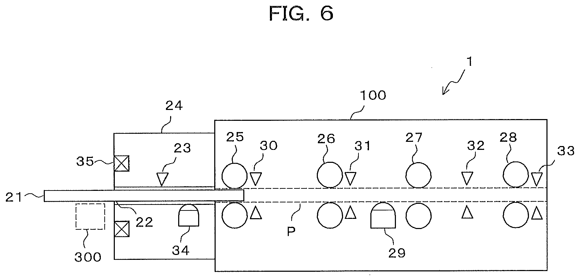

When drive current flows in the loop antenna 35, the loop antenna 35 generates a magnetic field around the insertion port 22. In the present embodiment, by continuously passing drive current to the loop antenna 35, the loop antenna 35 always generates a magnetic field. The magnetic field acts as an interfering magnetic field in front of the insertion port 22. In the case where a skimmer 300 is attached in front of the insertion port 22 as illustrated in Fig. 6, the magnetic field disturbs reading of magnetic information by the skimmer 300. The magnetic field acts as an interfering magnetic field also for the magnetic head 34 for detecting a magnetic stripe on the rear side of the insertion port 22 and disturbs illegal reading of magnetic information in the magnetic head 34.

Note that, in place of the loop antenna 35 illustrated in Fig. 2b, two independent loop antennas 35a and 35b may be disposed on both sides of the insertion port 22 as illustrated in Fig. 3a. Alternatively, as illustrated in Fig. 3b, one loop antenna 35c may be disposed only near the magnetic head 34 for detecting a magnetic stripe (Fig. 2a).

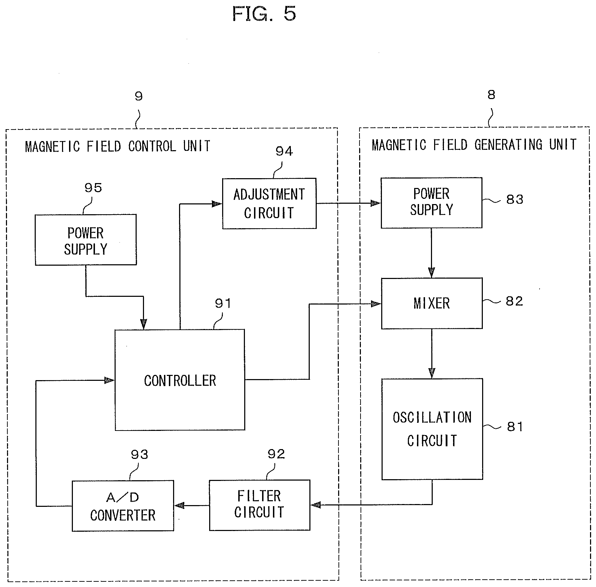

Fig. 5 illustrates a concrete configuration of the magnetic field generating unit 8 and the magnetic field control unit 9. The magnetic field generating unit 8 includes an oscillation circuit 81, a mixer 82, and a power supply 83. The oscillation circuit 81 is a known LC oscillation circuit including the above-described loop antenna 35 and a not-illustrated capacitor. The mixer 82 is constructed by a switching circuit including switching elements such as a relay and a transistor. The power supply 83 supplies DC voltage to the oscillation circuit 81 via the mixer 82.

The magnetic field control unit 9 has a controller 91, a filter circuit 92, an A/D converter 93, an adjustment circuit 94, and a power supply 95 and serves as "control means" in the present invention. To the filter circuit 92, an output voltage of the oscillation circuit 81 (hereinbelow, called "oscillation output") is supplied. The oscillation output expresses intensity of an interfering magnetic field. The filter circuit 92 smoothes an oscillation output. The A/D converter 93 samples an output voltage of the filter circuit 92 (hereinbelow, called "filter output") and converts it to a digital value. An output of the A/D converter 93 is supplied to the controller 91. The power supply 95 supplies DC voltage to the controller 91.

The controller 91 performs feedback control based on the intensity of the interfering magnetic field obtained from the output of the A/D converter 93 and supplies an instruction signal for making the amplitude of the output of the oscillation circuit 81 constant to the adjustment circuit 94. The adjustment circuit 94 receives the instruction signal and adjusts the voltage of the power supply 83. The controller 91 and the adjustment circuit 94 construct "adjusting means" in the present invention.

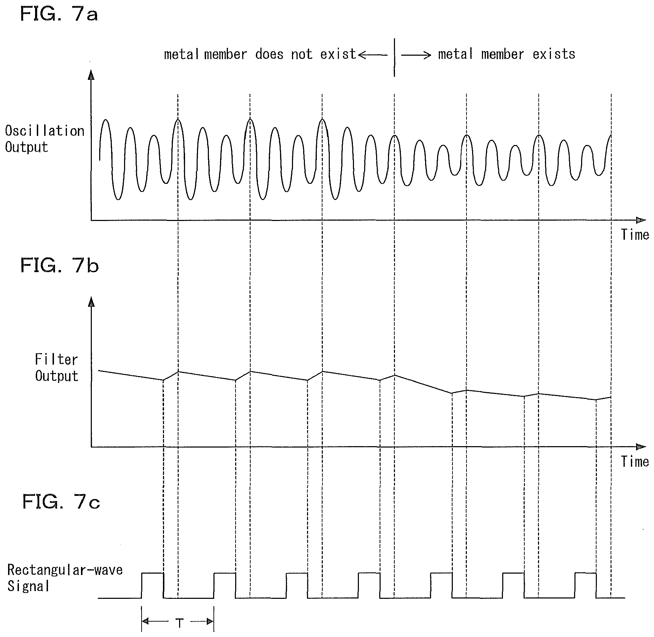

In addition, the controller 91 supplies a rectangular-wave signal as illustrated in Fig. 7c as a control signal to the mixer 82. The switching element as a component of the mixer 82 performs on/off operation synchronously with the rectangular-wave signal. While the switching element is on, the capacitor in the oscillation circuit 81 is charged by the power supply 83. When the switching element is turned off, the accumulated charges in the capacitor are discharged via the coil (loop antenna 35) and the oscillation circuit 81 oscillates. That is, the oscillation operation of the oscillation circuit 81 is controlled by the rectangular-wave signal. As a result, the oscillation circuit 81 generates an oscillation output modulated by the rectangular-wave signal as illustrated in Fig. 7a. The oscillation output is smoothed by the filter circuit 92 and a filter output (DC voltage) as illustrated in Fig. 7b is obtained from the filter circuit 92.

Next, a skimming measure in the card reader 1 having the above-described configuration will be described.

When the oscillation circuit 81 generates an oscillation output of Fig. 7a, drive current according to the oscillation output flows in the loop antenna 35. Accordingly, an interfering magnetic field according to the drive current is generated from the loop antenna 35. The interfering magnetic field acts on the front and rear sides of the insertion port 22. As described above, the interfering magnetic field is always generated from the loop antenna 35.

Therefore, as illustrated in Fig. 6, in the case where the skimmer 300 having the magnetic head is attached to the front side of the insertion port 22, the interfering magnetic field invariably acts on the skimmer 300. Consequently, data read by the magnetic head of the skimmer 300 is influenced by the interfering magnetic field and becomes different from the original data recorded on the card 21. Thus, the data of the card 21 can be prevented from being illegally obtained.

The interfering magnetic field also always acts on the magnetic head 34 for detecting a magnetic stripe on the rear side of the loop antenna 35. Therefore, it is impossible to illegally obtain data from the magnetic head 34 via a lead wire. It should be noted that the magnetic head 34 does not have to reproduce magnetic data itself. Consequently, even if the interfering magnetic field always acts on the magnetic head 34, the magnetic stripe 21a can be detected by using, for example, the fact that patterns of detection signals before and after detection of the magnetic stripe 21a are different.

Further, the interfering magnetic field generated from the loop antenna 35 is also used for detection of the skimmer 300. This will be described with reference to Figs. 7a to 7c. As illustrated in Fig. 7a, the amplitude of an oscillation output of the oscillation circuit 81 in the case where a metal member exists near the loop antenna 35 is different from that in the case where no metal member exists near the loop antenna 35. That is, in the case where there is no metal member around the loop antenna 35, the amplitude of the oscillation output is large, and in the case where there is a metal member, the amplitude of the oscillation output is small. Accordingly, as illustrated in Fig. 7b, the output of the filter circuit 92 is also large in the case where there is no metal member and is small in the case where there is a metal member.

Generally, the skimmer 300 has a metal member as a component. Also in the case where a shield for blocking an interfering magnetic field is attached to the skimmer 300, the shield is constructed by a metal member. Thus, the amplitude of the oscillation output becomes smaller when the skimmer 300 is installed, and therefore, the skimmer 300 can be detected by detecting a change in the amplitude. Concretely, for example, a threshold is set for a filter output in Fig. 7b and when the filter output becomes equal to or less than the threshold, the controller 91 determines that the skimmer 300 is installed.

In the case where the controller 91 determines that the skimmer 300 is installed, it notifies the host device 200 of the installation via the host interface 7 (Fig. 1). The host device 200 receives the notification and performs a process of outputting an alarm or the like.

As described above, in the present embodiment, a change in the amplitude of the interfering magnetic field generated by the loop antenna 35 is detected and, based on the detection result, the skimmer 300 is detected. Consequently, by a single loop antenna 35, while preventing illegal acquisition of data of the card 21 by skimming, the skimmer 300 can be detected. Thus, a dedicated sensor to detect a skimmer is unnecessary, and the cost and size can be reduced.

Moreover, in the present embodiment, the controller 91 outputs a rectangular-wave signal controlling the oscillation operation of the oscillation circuit 81 and detects a change in the oscillation output in the same controller 91. Consequently, the controller 91 can always correctly grasp the level of the filter output based on the rectangular-wave signal as a reference and thus detection precision of the skimmer 300 improves.

Further, by providing the adjustment circuit 94 so that the amplitude of the output of the oscillation circuit 81 is maintained constant, detection of the skimmer 300 can be performed stably with high precision.

In the above-described example, a change in the amplitude of an interfering magnetic field is detected. However, depending on the material of the metal member, the frequency of an interfering magnetic field in the case where a metal member exists near the loop antenna 35 is different from that in the case where no metal member exists near the loop antenna 35. Consequently, the skimmer 300 may be detected based on a change in the frequency of the interferingmagnetic field. Furthermore, the skimmer 300 may be detected based on both a change in amplitude and a change in frequency.

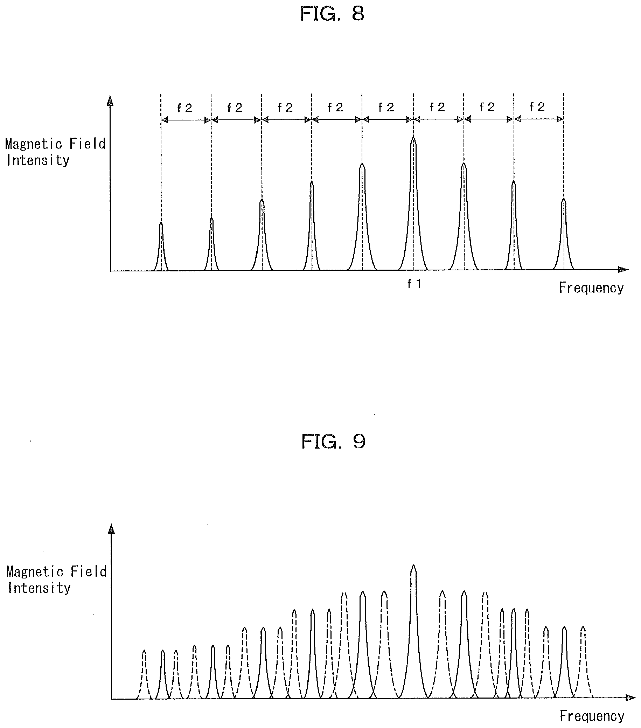

In the present embodiment, since the oscillation output of the oscillation circuit 81, in other words, the intensity of the interfering magnetic field is a signal modulated by a rectangular-wave signal as described above, it has peaks at a plurality of frequencies as illustrated in Fig. 8. In particular, since a rectangular-wave signal is used, peaks exist at various frequencies corresponding to harmonic components of the rectangular-wave signal. Consequently, even if the card 21 is inserted at various speeds, the probability that the frequency of a signal output from the magnetic head of the skimmer 300 overlaps the frequency of the interfering magnetic field is high, and thus skimming can be effectively prevented.

Meanwhile, in the present embodiment, when the oscillation frequency of the oscillation circuit 81 is expressed as f1 (first frequency) and the frequency of the rectangular-wave signal output from the controller 91 is expressed as f2 (second frequency), the relation of f1 > f2 is satisfied. As illustrated in Fig. 7c, when the cycle of the rectangular-wave signal is set to T, f2 = 1/T. In the case of Fig. 8, the frequency f2 of the rectangular-wave signal is constant and the interval of frequencies at which the peak of the magnetic field intensity occurs (hereinbelow, called "peak frequencies") is uniformly f2.

On the other hand, when the frequency of the rectangular-wave signal becomes larger than f2, the interval of the peak frequencies becomes larger than f2. When the frequency of the rectangular-wave signal becomes smaller than f2, the interval of peak frequencies becomes smaller than f2. Therefore, by changing the frequency of the rectangular-wave signal according to time zones, more peak frequencies can be obtained as illustrated in Fig. 9. The solid line, the broken line, and the chain line in Fig. 9 express peak frequencies in different time zones. In such a manner, the interfering magnetic field can cover a wide frequency domain, so that skimming to the card 21 inserted at various speeds can be prevented more reliably.

The frequency of the rectangular-wave signal may be changed at random. In this case, the peak frequency also changes at random. In this manner, the skimmer 300 cannot know the peak frequency at which the interfering magnetic field is generated. Hence, it is impossible to cut the frequency of the interfering magnetic field by filtering. Note that, in place of changing the frequency of the rectangular-wave signal at random, the frequency of the rectangular-wave signal may be regularly changed according to a pattern which cannot be discriminated by the skimmer 300.

Considering that the frequency of a read signal of the card 21 (output of the magnetic head) generally lies in the range of 100 Hz to 20 KHz, preferably, the frequency domain of the interfering magnetic field is set to 100 Hz to 20 KHz in accordance with the above-mentioned range, and peak frequencies as many as possible exist in the frequency domain. In such a manner, virtually, even if the card 21 is inserted at any speed, the output of the skimmer 300 can be disturbed by the interfering magnetic field.

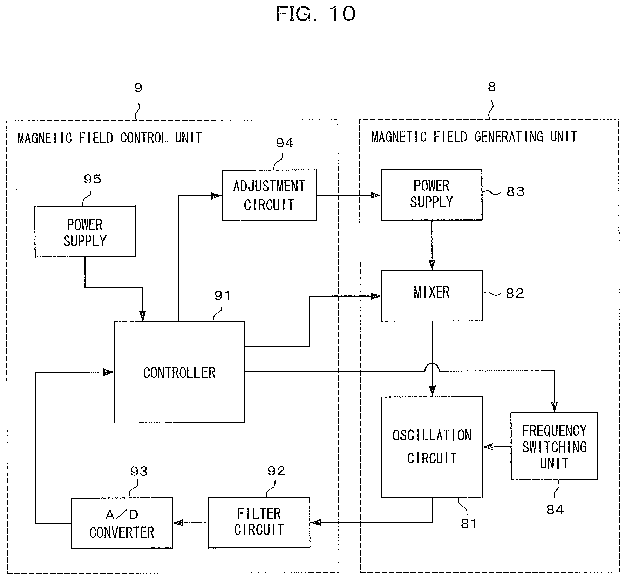

Fig. 10 illustrates another embodiment of the present invention. Since the general configuration of the card reader is the same as that in Figs. 1 and 2, the description will not be given. In Fig. 10, the magnetic field generating unit 8 is provided with a frequency switching unit 84. The frequency switching unit 84 corresponds to "switching means" in the present invention. Since the other configurations are the same as those in Fig. 5, the descriptions of overlapping parts in Fig. 5 will not be given.

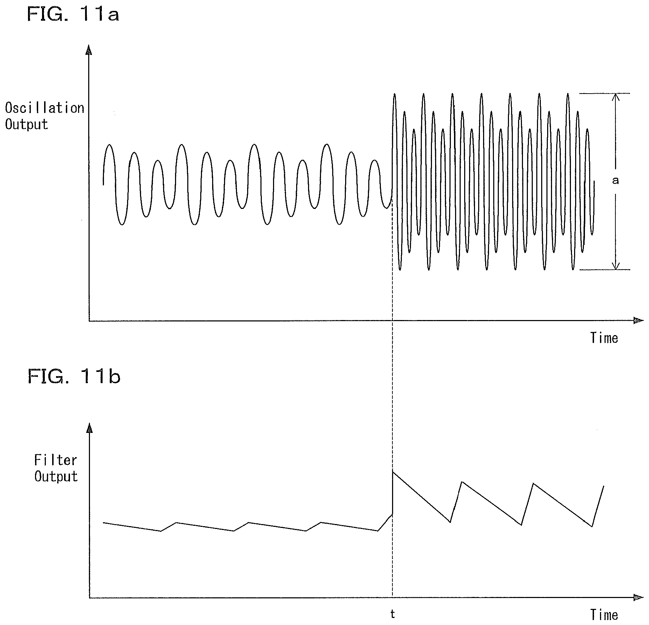

The frequency switching unit 84 switches the oscillation frequency of the oscillation circuit 81 based on an instruction signal from the controller 91. Figs. 11a and 11b illustrate a state of the switching. Fig. 11a illustrates an oscillation output of the oscillation circuit 81, and Fig. 11b illustrates a filter output of the filter circuit 92.

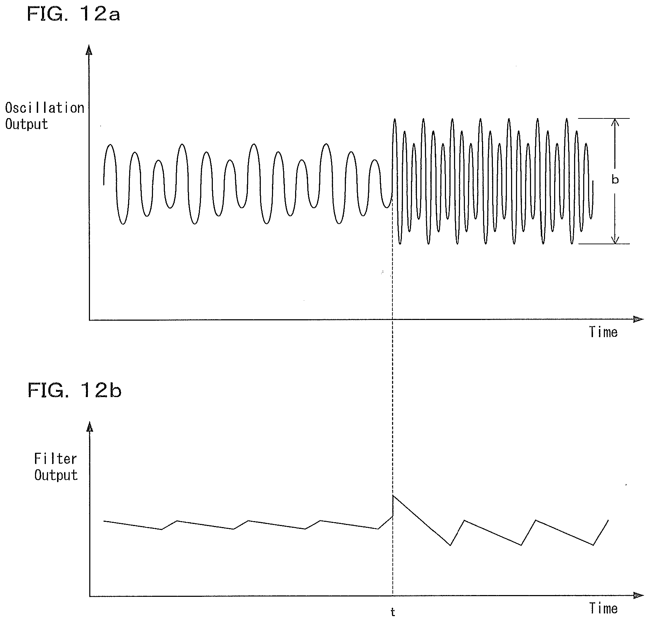

As illustrated in Fig. 11a, the frequency of the oscillation output is switched from low frequency to high frequency at time t. The waveform of the oscillation output is a waveform in the case where a metal member does not exist near the loop antenna 35. In the figure, "a" expresses the amplitude of the oscillation output after the frequency is switched. On the other hand, in the case where a metal member exists near the loop antenna 35, the waveform of the oscillation output becomes like that as illustrated in Fig. 12a. Specifically, when it is assumed that a metal member is detected at time t, the amplitude "b" of the oscillation output becomes smaller than the amplitude "a" in the case where a metal member does not exist. Accordingly, a filter output after the time t in Fig. 12b becomes smaller than the filter output after time t in Fig. 11b. Therefore, the skimmer 300 can be detected by setting a threshold for a filter output after the frequency is switched.

Generally, the higher the frequency of the interfering magnetic field is, the more the metal member detectable range expands, and detection precision improves. On the other hand, from the viewpoint of effectively preventing skimming, it is preferable that the frequency of the interfering magnetic field is low in accordance with the insertion speed of the card 21. Therefore, by switching the frequency of the interfering magnetic field by the frequency switching unit 84 as described above, skimming can be effectively prevented by the interfering magnetic field of a low frequency, and the skimmer 300 can be detected with high precision by the interfering magnetic field of a high frequency.

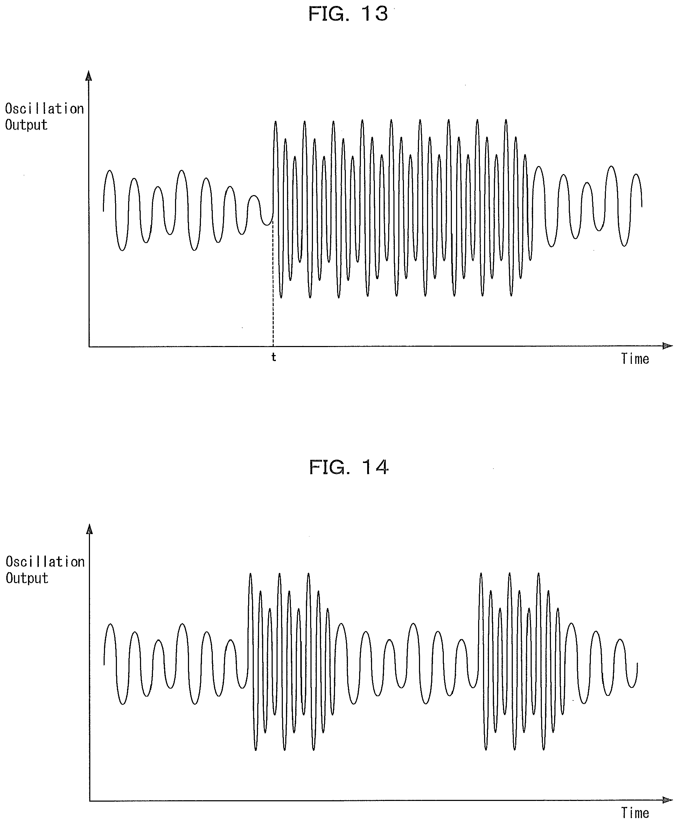

There are some methods of determining the timing of switching the frequency of the interfering magnetic field by the frequency switching unit 84. For example, in an example illustrated in Fig. 13, at time (time t) when the controller 91 detects that the intensity of the interfering magnetic field (oscillation output) starts decreasing in a state where the frequency of the interfering magnetic field is low, an instruction signal is output from the controller 91 to the frequency switching unit 84. Based on the instruction signal, the frequency switching unit 84 switches the frequency of the interfering magnetic field to a higher frequency. When the skimmer 300 is detected, the frequency of the interfering magnetic field is switched again to a low frequency.

In such a manner, at the time point when the interfering magnetic field starts changing due to installation of a metal member, the frequency of the interfering magnetic field is automatically switched to a high frequency adapted to detect a metal member. Therefore, the skimmer 300 can be detected promptly and reliably. After the skimmer 300 is detected, the frequency of the interfering magnetic field returns to the low frequency adapted to skimming prevention, so that illegal acquisition of data by the skimmer 300 can be prevented.

As another method, as illustrated in Fig. 14, the oscillation frequency may be switched every predetermined time so that the interfering magnetic field of low frequency and the interfering magnetic field of high frequency are generated alternately.

Meanwhile, in each of the foregoing embodiments, the interfering magnetic field is generated in front of the insertion port 22. Consequently, at the time of inserting the card 21, there is the possibility that a ring, a watch, or the like worn on a hand is detected erroneously as a metal member of the skimmer 300.

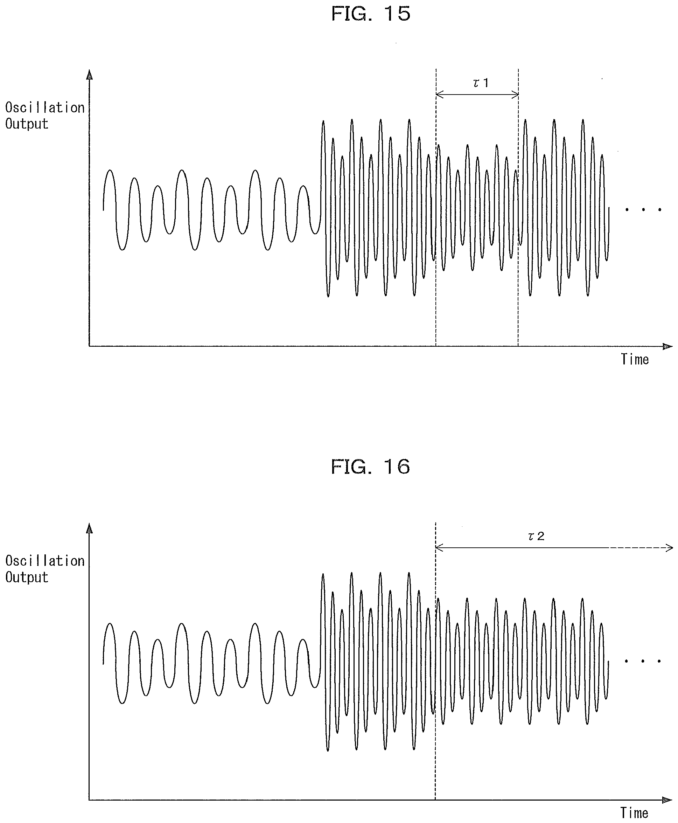

However, since a ring, a watch, or the like merely approaches the loop antenna 35 temporarily at the time of card insertion, a period τ1 in which the amplitude of the oscillation output decreases is short time, as illustrated in Fig. 15. On the other hand, the skimmer 300 continuously exists after installation, so that a period τ2 in which the amplitude of the oscillation output becomes small is long time as illustrated in Fig. 16.

In view of the above, the controller 91 determines whether or not the state where the amplitude of the oscillation output becomes small (the state where the filter output becomes small), that is, the state where the interfering magnetic field changes continues for predetermined time. If the state continues for predetermined time, the controller 91 determines that the skimmer 300 is installed. In such a manner, erroneous detection due to a ring, a watch, or the like can be prevented. In the case where it is determined that the skimmer 300 is installed, the controller 91 notifies the host device 200 of the installation via the host interface 7 (Fig. 1). The host device 200 receives the notification and performs a process of outputting an alarm or the like.

In the foregoing embodiment, a measure against skimming in the case where the card 21 is inserted was described. Since the interfering magnetic field is always generated from the loop antenna 35, skimming can be prevented also in the case where the card 21 is returned.

Although detection of a skimmer was described as an example in the foregoing embodiment, according to the present invention, a metal foreign matter other than a skimmer can be also detected.

The present invention can employ not only the above-described embodiment but also various embodiments. Although the loop antennas in Figs. 2a and 2b and Figs. 3a and 3b were taken as examples in the foregoing embodiment, the present invention is not limited to those loop antennas. For example, three or more loop antennas may be provided. In this case, a stronger interfering magnetic field is generated, so that skimming can be prevented more effectively.

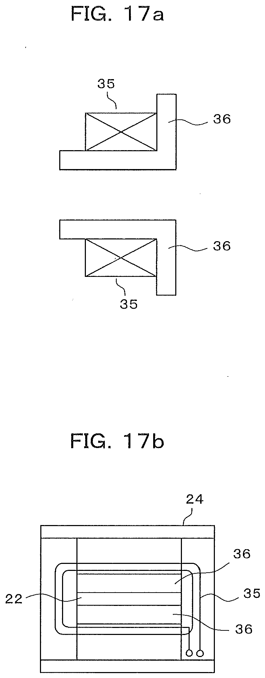

Moreover, as illustrated in Figs. 17a and 17b, by disposing a core 36 made of ferrite, iron, silicon steel plate, or the like having high magnetic permeability for the loop antenna 35, the magnetic field can have directivity or a stronger interfering magnetic field can be generated. As a result, a stronger interfering magnetic field is generated over long distances to the skimmer 300 attached to the front side of the insertion port 22, and the influence of the interfering magnetic field can be eliminated for the magnetic head 29 for reading magnetic data disposed on the rear side of the insertion port 22.

Although the example that the interfering magnetic field is always generated from the loop antenna 35 was described in the foregoing embodiment, predetermined pause time may be provided for the interfering magnetic field.

In the foregoing embodiment, as a magnetic recording medium, the magnetic card having the magnetic stripe on its rear surface was taken as an example. However, the present invention can be also applied to a magnetic recording medium reading device handling a magnetic card having a magnetic stripe on the front surface or both front and rear surfaces.

In the foregoing embodiment, a magnetic card was taken as an example of a magnetic recording medium. However, the present invention can be also applied to a device for reading, not limited to a magnetic card but, a magnetic recording medium such as a passbook having a magnetic stripe.

### Industrial Applicability

The present invention can be applied to any devices for reading a magnetic recording medium such as a card reader and a passbook reader installed on an automatic transaction processing device such as an ATM, or a card reader installed in a card verifying terminal.

### Reference Signs List

- 1: card reader
- 8: magnetic field generating unit
- 9: magnetic field control unit
- 21: magnetic card
- 22: insertion port
- 35: loop antenna
- 36: core
- 81: oscillation circuit
- 82: mixer
- 84: frequency switching unit
- 91: controller
- 92: filter circuit
- 93: A/D converter
- 94: adjustment circuit
- 200: host device
- 300: skimmer

## Claims

1. A magnetic recording medium reading device comprising:
an insertion port (22) in which a magnetic recording medium is to be inserted;
a magnetic field generating unit (8) that is provided near the insertion port (22) and generates an interfering magnetic field to disturb illegal reading of data recorded in the magnetic recording medium; and
control means (9) that controls the magnetic field generating unit (8),
**characterized in that** the control means (9) detects a change in the interfering magnetic field generated by the magnetic field generating unit (8), determines whether or not a state where the interfering magnetic field changes continues for predetermined time and, in the case where the state continues for predetermined time, the control means (8) determines that a metal member other than a thing worn on a hand is installed near the insertion port (22) based on the detection result.

2. The magnetic recording medium reading device according to claim 1, wherein the magnetic field generating unit (8) has an oscillation circuit (81) including a loop antenna for generating the interfering magnetic field.

3. The magnetic recording medium reading device according to claim 2, wherein oscillation frequency of the oscillation circuit (81) is a first frequency,
the control means outputs a control signal having a second frequency lower than the first frequency to the magnetic field generating unit (8), and
the oscillation circuit (81) performs an oscillating operation based on the control signal.

4. The magnetic recording medium reading device according to claim 3, wherein the control signal is a rectangular-wave signal.

5. The magnetic recording medium reading device according to claim 4, wherein the frequency of the rectangular-wave signal changes according to time zones.

6. The magnetic recording medium reading device according to claim 4, wherein the frequency of the rectangular-wave signal changes at random.

7. The magnetic recording medium reading device according to claim 1, wherein a frequency domain of the interfering magnetic field is 100 Hz to 20 KHz.

8. The magnetic recording medium reading device according to claim 2, further comprising switching means which switches oscillation frequency of the oscillation circuit (81).

9. The magnetic recording medium reading device according to claim 8, wherein the switching means switches the oscillation frequency at the time point when the control means (9) detects that the interfering magnetic field starts changing.

10. The magnetic recording medium reading device according to claim 8, wherein the switching means switches the oscillation frequency every predetermined time.

11. The magnetic recording medium reading device according to claim 1, wherein the control means (9) notifies a host device (200) of installation of the metal member in the case where the control means (8) determines that the metal member is installed.

12. The magnetic recording medium reading device according to claim 2, further comprising adjusting means for making amplitude of an output of the oscillation circuit (81) constant.

## Patentansprüche

1. Vorrichtung zum Lesen eines magnetischen Aufzeichnungsmediums, die Folgendes umfasst:
einen Einsetzschlitz (22), in den ein magnetisches Aufzeichnungsmedium einzusetzen ist;
eine Magnetfelderzeugungseinheit (8), die in der Nähe des Einsetzschlitzes (22) vorgesehen ist und ein Störmagnetfeld erzeugt, um ein illegales Lesen von Daten, die in dem magnetischen Aufzeichnungsmedium aufgezeichnet sind, zu stören; und
Steuermittel (9), die die Magnetfelderzeugungseinheit (8) steuern,
**dadurch gekennzeichnet, dass** die Steuermittel (9) eine Änderung des Störmagnetfeldes, das durch die Magnetfelderzeugungseinheit (8) erzeugt wird, detektieren und bestimmen, ob ein Zustand, in dem sich das Störmagnetfeld ändert, für eine vorgegebene Zeit andauert oder nicht, wobei die Steuermittel (8) dann, wenn der Zustand für eine vorgegebene Zeit andauert, anhand des Detektionsergebnisses bestimmen, dass ein Metallelement, das von einem um eine Hand gewickelten Gegenstand verschieden ist, in der Nähe des Einsetzschlitzes (22) installiert ist.

2. Vorrichtung zum Lesen eines magnetischen Aufzeichnungsmediums nach Anspruch 1, wobei die Magnetfelderzeugungseinheit (8) eine Oszillationsschaltung (81) umfasst, die eine Schleifenantenne enthält, um das Störmagnetfeld zu erzeugen.

3. Vorrichtung zum Lesen eines magnetischen Aufzeichnungsmediums nach Anspruch 2, wobei die Oszillationsfrequenz der Oszillationsschaltung (81) eine erste Frequenz ist,
die Steuermittel ein Steuersignal, das eine zweite Frequenz besitzt, die niedriger als die erste Frequenz ist, an die Magnetfelderzeugungseinheit (8) ausgeben und
die Oszillationsschaltung (81) einen Oszillationsbetrieb anhand des Steuersignals ausführt.

4. Vorrichtung zum Lesen eines magnetischen Aufzeichnungsmediums nach Anspruch 3, wobei das Steuersignal ein Rechteckwellensignal ist.

5. Vorrichtung zum Lesen eines magnetischen Aufzeichnungsmediums nach Anspruch 4, wobei sich die Frequenz des Rechteckwellensignals in Übereinstimmung mit Zeitzonen ändert.

6. Vorrichtung zum Lesen eines magnetischen Aufzeichnungsmediums nach Anspruch 4, wobei sich die Frequenz des Rechteckwellensignals zufällig ändert.

7. Vorrichtung zum Lesen eines magnetischen Aufzeichnungsmediums nach Anspruch 1, wobei ein Frequenzbereich des störenden Magnetfeldes von 100 Hz bis 20 kHz reicht.

8. Vorrichtung zum Lesen eines magnetischen Aufzeichnungsmediums nach Anspruch 2, die ferner Schaltmittel umfasst, die die Oszillationsfrequenz der Oszillationsschaltung (81) umschalten.

9. Vorrichtung zum Lesen eines magnetischen Aufzeichnungsmediums nach Anspruch 8, wobei die Schaltmittel die Oszillationsfrequenz zu dem Zeitpunkt umschalten, zu dem die Steuermittel (9) detektieren, dass sich das Störmagnetfeld zu ändern beginnt.

10. Vorrichtung zum Lesen eines magnetischen Aufzeichnungsmediums nach Anspruch 8, wobei die Schaltmittel die Oszillationsfrequenz zu jeder vorgegebenen Zeit umschalten.

11. Vorrichtung zum Lesen eines magnetischen Aufzeichnungsmediums nach Anspruch 1, wobei die Steuermittel (9) einer Host-Vorrichtung (200) die Installation des Metallelements in dem Fall melden, in dem die Steuermittel (8) bestimmen, dass das Metallelement installiert ist.

12. Vorrichtung zum Lesen eines magnetischen Aufzeichnungsmediums nach Anspruch 2, die ferner Einstellmittel umfasst, um die Amplitude eines Ausgangs der Oszillationsschaltung (81) konstant zu machen.

## Revendications

1. Dispositif de lecture de support d'enregistrement magnétique comprenant :
un orifice d'introduction (22) dans lequel un support d'enregistrement magnétique doit être introduit ;
une unité de génération de champ magnétique (8) qui est prévue à proximité de l'orifice d'introduction (22) et qui génère un champ magnétique interférant pour perturber une lecture illégale de données enregistrées dans le support d'enregistrement magnétique ; et
un moyen de commande (9) qui commande l'unité de génération de champ magnétique (8),
**caractérisé en ce que** le moyen de commande (9) détecte un changement dans le champ magnétique interférant généré par l'unité de génération de champ magnétique (8), détermine si un état dans lequel le champ magnétique interférant change continue ou non pendant un temps prédéterminé et, dans le cas où l'état continue pendant un temps prédéterminé, le moyen de commande (8) détermine qu'un élément métallique autre qu'un objet porté sur une main est installé à proximité de l'orifice d'introduction (22) sur la base du résultat de détection.

2. Dispositif de lecture de support d'enregistrement magnétique selon la revendication 1, dans lequel l'unité de génération de champ magnétique (8) comprend un circuit oscillant (81) incluant une antenne en boucle pour générer le champ magnétique interférant.

3. Dispositif de lecture de support d'enregistrement magnétique selon la revendication 2, dans lequel la fréquence d'oscillations du circuit oscillant (81) est une première fréquence,
le moyen de commande délivre un signal de commande ayant une seconde fréquence inférieure à la première fréquence vers l'unité de génération de champ magnétique (8), et
le circuit oscillant (81) effectue une opération d'oscillations sur la base du signal de commande.

4. Dispositif de lecture de support d'enregistrement magnétique selon la revendication 3, dans lequel le signal de commande est un signal d'onde rectangulaire.

5. Dispositif de lecture de support d'enregistrement magnétique selon la revendication 4, dans lequel la fréquence du signal d'onde rectangulaire change en fonction des zones temporelles.

6. Dispositif de lecture de support d'enregistrement magnétique selon la revendication 4, dans lequel la fréquence du signal d'onde rectangulaire change de façon aléatoire.

7. Dispositif de lecture de support d'enregistrement magnétique selon la revendication 1, dans lequel un domaine de fréquence du champ magnétique interférant est de 100 Hz à 20 kHz.

8. Dispositif de lecture de support d'enregistrement magnétique selon la revendication 2, comprenant en outre un moyen de commutation qui commute la fréquence d'oscillations du circuit oscillant (81).

9. Dispositif de lecture de support d'enregistrement magnétique selon la revendication 8, dans lequel le moyen de commutation commute la fréquence d'oscillations à l'instant auquel le moyen de commande (9) détecte que le champ magnétique interférant commence à changer.

10. Dispositif de lecture de support d'enregistrement magnétique selon la revendication 8, dans lequel le moyen de commutation commute la fréquence d'oscillations à chaque instant prédéterminé.

11. Dispositif de lecture de support d'enregistrement magnétique selon la revendication 1, dans lequel le moyen de commande (9) notifie à un dispositif hôte (200) l'installation de l'élément métallique dans le cas où le moyen de commande (8) détermine que l'élément métallique est installé.

12. Dispositif de lecture de support d'enregistrement magnétique selon la revendication 2, comprenant en outre un moyen d'ajustement pour rendre constante l'amplitude d'une sortie du circuit oscillant (81).
